# EUROPÄISCHE PATENTSCHRIFT

(11) **EP 3 593 935 B1**
(45) Veröffentlichungstag und Bekanntmachung des Hinweises auf die Patenterteilung: **13.01.2021**
(21) Anmeldenummer: 19184631.0
(22) Anmeldetag: 05.07.2019
(51) Int. Cl.: B23K 26/10, B23K 26/14, B23K 26/28, B23K 26/70, B23K 101/04

(54) **WERKZEUGANORDNUNG UND VERFAHREN ZUM AUFNEHMEN EINES OPTISCHEN WERKZEUGES IN EINER PARKPOSITION**
TOOL ARRANGEMENT AND METHOD FOR RECEIVING AN OPTICAL TOOL IN A PARK POSITION
SYSTEME D'OUTIL ET PROCÉDÉ DE RÉCEPTION D'UN OUTIL OPTIQUE EN POSITION DE REPOS

(30) Priorität: 10.07.2018 DE 102018211423
(43) Veröffentlichungstag der Anmeldung: 15.01.2020
(73) Patentinhaber: Volkswagen Aktiengesellschaft, 38436 Wolfsburg (DE)
(72) Erfinder: Richter, Stefan, 38531 Rötgesbüttel (DE); Marx, Sebastian, 38159 Vechelde (DE); Hirschfeldt, Mike, 38124 Brauschweig (DE)

(56) Entgegenhaltungen:
- WO-A1-2016/015922
- DE-A1-102013 209 654
- DE-A1-102016 213 075

## Beschreibung

Die Erfindung betrifft eine Werkzeuganordnung zum abschnittsweisen Aufnehmen eines optischen Werkzeuges in einer Parkposition, aufweisend ein optisches Werkzeug und aufweisend ein Gehäuse mit einer Öffnung geeignet zum abschnittsweisen Aufnehmen des optischen Werkzeuges in einem Gehäuseinnenraum, mit einer mit dem Gehäuse verbundenen fluidleitenden Gehäuseableitung, und mit einer an der Öffnung des Gehäuses angeordneten Dichtmanschette sowie ein Verfahren zum abschnittsweisen Aufnehmen eines optischen Werkzeuges in einer Parkposition.

Laserstrahlschneidanlagen werden in unterschiedlichen technischen Bereichen eingesetzt und können sich durch Präzision und Automatisierungsmöglichkeiten auszeichnen. Derartige Laserstrahlschneidanlagen weisen neben einer Steuerungseinheit üblicherweise eine Mechanik zum Ausrichten eines Werkzeugabschnittes relativ zu einem Werkstück auf. Werkzeugabschnitte können beispielsweise Laserinnenbearbeitungswerkzeuge sein, welche endseitig einen Spiegelkopf zum Ablenken und Fokussieren eines Laserstrahls aufweisen.

Die Laseroptik im Spiegelkopf am Laserinnenbearbeitungswerkzeug ist anfällig für Verschmutzungen. Wenn Verschmutzungen in eine Laseraustrittsöffnung im Spiegelkopf gelangen, können die Verschmutzungen den Laserstrahl ablenken und Qualitätsprobleme bei der Bearbeitung des Werkstücks und Schäden am Spiegelkopf bzw. dem Werkzeugabschnitt verursachen.

Wenn eine Laserstrahlschneidanlage im Stillstand ist, wird entweder Druckluft oder Stickstoff kontinuierlich aus der Laseraustrittsöffnung hinausgeleitet. Hierdurch kann verhindert werden, dass Verschmutzung in den Spiegelkopf gelangt.

Druckluft hat üblicherweise keine ausreichende Reinheit, wodurch allein durch die Druckluftströmung neue Verunreinigungen in die Laseroptik bzw. die Laseraustrittsöffnung gelangen können. Des Weiteren ist die Möglichkeit bekannt, Stickstoff durch die Laseraustrittsöffnung hinauszuleiten. Stickstoff wird als Prozessgas eingesetzt und steht auch bei einem Anlagenstillstand zur Verfügung. Es ist jedoch erforderlich, dass beim Ausströmen von Stickstoff die Anlagenabsaugung in Betrieb ist, da sonst Lebensgefahr für Personen im Umfeld der Laserstrahlschneidanlage besteht. Problematisch hierbei ist, dass die Anlagenabsaugung auch bei längeren Stillstandzeigen, wie beispielsweise einem Werkurlaub, kontinuierlich in Betrieb sein muss.

Als eine weitere Lösungsmöglichkeit ist ein manuelles Abkleben der Laseraustrittsöffnung durch einen Mitarbeiter bekannt. Problematisch hierbei ist jedoch, dass in einem Serienprozess mit häufigen kurzen Stillstandzeiten diese Methode nicht zuverlässig durchgeführt werden kann.

Aus der WO 2016/015922 A1 ist eine Vorrichtung und ein Verfahren zur metallischen Beschichtung eines Werkzeugs mit einer verfahrbaren Beschichtungslanze bekannt, durch welche ein Metall-Plasmastrahl zum Bilden der Beschichtung aus Metallpartikeln erzeugbar ist. Hierbei ist eine Absaugglocke vorgesehen, welche zumindest einen axialen Abschnitt der Beschichtungslanze ringförmig umgibt, und wobei die Absaugglocke eine ringförmige Aufnahmeeinheit aufweist, welche zum Anlagern von Metallpartikeln ausgebildet ist. Weiterhin kann durch die Absaugglocke auch eine Luft- oder Schutzgasströmung erzeugt werden, durch welche belastete Umgebungsluft zu einer Ausführleitung im Bereich der Absaugglocke geleitet wird.

Die DE 10 2016 213 075 A1 zeigt eine Vorrichtung und ein Verfahren zur Oberflächenbearbeitung eines Hohlraums, bei denen ein Bearbeitungswerkzeug in den Hohlraum eingefahren wird und mit dem Bearbeitungswerkzeug die Oberfläche des Hohlraums bearbeitet wird. Hierbei wird ein Spülgas in den Hohlraum eingeleitet, und es wird an eine Öffnung des Hohlraums eine Absauganlage angeschlossen, um das Spülgas sowie bei der Bearbeitung gegebenenfalls entstehende Partikel abzusaugen.

Aus der DE 10 2013 209 654 A1 ist eine Einkapselungsanordnung bekannt, die eine bewegbare Plattform, welche innerhalb des Gehäuses angeordnet ist, und eine bewegbare Trennwand aufweist, wobei zwischen der Trennwand und einer Außenwand des Gehäuses ein Zwischenraum gebildet ist und ein Abdichtungsmechanismus vorgesehen ist, mit dem verhindert wird, dass Licht durch den Zwischenraum hindurch gelangt.

Der Erfindung liegt die Aufgabe zugrunde, eine Werkzeuganordnung und ein Verfahren zum kosteneffizienten, sicheren und automatisierbaren Abstellen eines Werkzeugabschnitts in einer Parkposition zu schaffen. Diese Aufgabe wird durch eine Vorrichtung mit den im Anspruch 1 und ein Verfahren mit den im Anspruch 7 angegebenen Merkmalen gelöst. Weitere vorteilhafte Ausgestaltungen der Erfindung sind in den Unteransprüchen beschrieben.

Gemäß einem Aspekt der Erfindung wird eine Werkzeuganordnung zum abschnittsweisen Aufnehmen eines optischen Werkzeuges in einer Parkposition bereitgestellt. Die Werkzeuganordnung weist ein optisches Werkzeug und ein Gehäuse auf. In dem Gehäuse ist eine Öffnung eingebracht, welche dazu geeignet ist, das optische Werkzeug zumindest abschnittsweise in einem Gehäuseinnenraum aufzunehmen. Des Weiteren weist das Gehäuse eine mit dem Gehäuseinnenraum fluidleitend verbundene Gehäuseableitung auf. An der Öffnung des Gehäuses ist eine Dichtmanschette angeordnet, wobei die Dichtmanschette eine fluidführende Leitung zum Anpassen eines variablen Füllvolumens der Dichtmanschette aufweist.

Hierdurch kann eine Station zum Aufnehmen eines Werkzeugabschnittes bzw. einem abschnittsweisen Aufnehmen des optischen Werkzeugs bereitgestellt werden. Das Gehäuse ist vorzugsweise ortsfest angeordnet. Wird das optische Werkzeug nicht gebraucht, kann dieses automatisiert oder manuell zum Gehäuse verfahren werden. Insbesondere kann hierfür die Position der Öffnung des Gehäuses und die Eintauchtiefe des Werkzeugabschnittes in der Öffnung dem Werkzeug oder einer Werkzeugsteuerung bekannt sein.

Das optische Werkzeug kann vorzugsweise eine Laserstrahlschneidanlage sein, welche eine definiert bewegbare Laserlanze mit einem endseitigen Spiegelkopf aufweist. Die Laserstrahlschneidanlage kann insbesondere als ein Laserinnenbearbeitungswerkzeug ausgestaltet sein.

Bevorzugterweise können in dem Gehäuse weitere Vorrichtungen und Geräte angeordnet werden. Beispielsweise kann eine Vorrichtung zum Durchführen von Laserleistungsmessungen in das Gehäuse integriert oder mit dem Gehäuse verbunden sein.

Die durch die Öffnung in den Gehäuseinnenraum eingetauchte Laserlanze mit dem Spiegelkopf bzw. der Werkzeugabschnitt kann durch eine "aufblasbare Dichtmanschette" abgedichtet werden. Die Dichtmanschette ist im Bereich der Öffnung des Gehäuses angeordnet und kann automatisiert ihr Volumen verändern, um einen Luftspalt zwischen einem Rand der Öffnung und dem Werkzeugabschnitt anzupassen. In einer Parkposition des optischen Werkzeuges kann durch die Dichtmanschette ein Luftspalt eliminiert werden und somit ein gasdichter Abschluss zwischen dem Werkzeugabschnitt und dem Gehäuse erzielt werden. Zum Entnehmen oder zum Einsetzen des Werkzeugabschnittes im Gehäuseinnenraum kann ein definierter Luftspalt durch Reduzieren des Füllvolumens der Dichtmanschette eingestellt werden. Die Dichtmanschette ist vorzugsweise über ein manuell oder automatisiert betätigbares Ventil mit einer Fluidleitung verbunden. Die Fluidleitung kann beispielsweise Druckluft oder Stickstoff bereitstellen. Hierdurch kann das Füllvolumen der Dichtmanschette mit üblicherweise bereits vorhandenen Gasen gefüllt werden. Alternativ kann das Füllvolumen der Dichtmanschette mit einer Flüssigkeit, wie beispielsweise Wasser oder einem Öl, gefüllt werden.

In der Parkposition des optischen Werkzeugs kann der Gehäuseraum durch die Dichtmanschette gasdicht abgeriegelt werden. Durch ein Fluten des Gehäuseinnenraumes mit beispielsweise Stickstoff können Luft und eventuelle Verschmutzungen aus dem Gehäuseinnenraum verdrängt werden. Über die Gehäuseableitung kann die Luft entweichen oder unter Erzeugung eines Unterdrucks abgesaugt werden. Die Gehäuseableitung kann mit einer separaten Absaugung oder einer werkzeugseitigen Anlagenabsaugung fluidleitend gekoppelt sein.

Nach einer definierten Zeit oder nach einem Erreichen einer definierten Stickstoffkonzentration kann die Zuführung des Gases unterbrochen und die Absaugöffnung verschlossen werden. Somit kann das optische Werkzeug, wie beispielsweise eine Laseroptik mit einer empfindlichen Laseraustrittsöffnung, in einem gereinigten und verschlossenen Raum verbleiben. Es können auch andere Gase zum Fluten des Gehäuseinnenraums oder zum Einstellen eines Füllvolumens der Dichtmanschette eingesetzt werden. Beispielsweise können auch Helium, reiner Sauerstoff, Argon und dergleichen verwendet werden.

Ein derartiges Gehäuse kann einen Werkzeugabschnitt mit einem empfindlichen Spiegelkopf ohne Verbrauchskosten automatisch aufnehmen. Hierdurch kann eine kostengünstige und prozesssichere Möglichkeit realisiert werden, um einen Werkzeugabschnitt aufzubewahren. Bei längeren Stillstandzeiten strömen durch die erfindungsgemäße Anordnung keine gefährlichen Gase in ein Umfeld des optischen Werkzeuges. Dabei kann die Anlagenabsaugung des optischen Werkzeuges ausgeschaltet sein.

Das optische Werkzeug kann optimal in dem Gehäuseinnenraum angeordnet und anschließend hermetisch abgedichtet werden, wenn ein Abstand zwischen einem Rand der Öffnung des Gehäuses und des abschnittsweise aufgenommenen optischen Werkzeuges durch die Dichtmanschette abdichtbar ist.

Durch eine aus einem flexiblen Material gefertigte Dichtmanschette kann eine Änderung des Füllvolumens der Dichtmanschette effizient und mit einem geringen Energieaufwand umgesetzt werden. Insbesondere können durch eine derartige Dichtmanschette unterschiedlich ausgestaltete Werkzeugabschnitte aufgenommen und variierende Luftspalte zwischen dem Werkzeugabschnitt und dem Rand der Öffnung kompensiert werden.

Das Gehäuse kann technisch besonders einfach und preiswert hergestellt werden, wenn die Öffnung des Gehäuses rund ausgestaltet ist und die Dichtmanschette entlang des Umfangs der runden Öffnung des Gehäuses angeordnet ist.

Verschmutzungen im Gehäuseinnenraum können effektiv entfernt werden, wenn ein Fluid zum Aufrechterhalten eines Reinheitsgrades in dem Gehäuseinnenraum aus einer Fluidzufuhr des optischen Werkzeuges und/oder über eine Gehäusezuleitung in den Gehäuseinnenraum einleitbar ist.

Gemäß einem Ausführungsbeispiel weist die Werkzeuganordnung eine Leistungsmessvorrichtung auf, welche in dem Gehäuse zur Überprüfung einer Funktion des optischen Werkzeuges angeordnet ist. Hierdurch kann neben einer abschnittsweisen Aufbewahrungsmöglichkeit des optischen Werkzeuges eine zusätzliche Prüfstation zur Überwachung der Laserleistung des optischen Werkzeuges bereitgestellt werden. Es kann beispielsweise vor einer erneuten Inbetriebnahme des optischen Werkzeuges eine Laserleistungsmessung durchgeführt werden. Alternativ kann eine Laserleistungsmessung vor einem Abstellen bzw. Parken des optischen Werkzeugs im Gehäuse durchgeführt werden.

Sollte die Laserleistungsmessung abgeschlossen sein und der Werkzeugabschnitt bzw. die Laserlanze in der Parkposition bleiben müssen, strömt solange noch Stickstoff aus, bis der Gehäuseinnenraum geflutet ist und Schmutzpartikel über die Gehäuseableitung abgesaugt sind.

Die Laserleistungsmessung kann technisch einfach und zuverlässig durchgeführt werden, wenn durch die Leistungsmessvorrichtung eine Abweichung eines Istwertes des optischen Werkzeuges von einem Sollwert messbar ist.

Nach einer Ausführungsform weist die Leistungsmessvorrichtung eine Steuereinheit zum Durchführen von Auswertungen und zum Ermitteln von Hinweisen zur Benutzung des optischen Werkzeuges auf. Hierdurch kann die Werkzeuganordnung mit der Leistungsmessvorrichtung zusätzliche Hinweise und Funktionen bereitstellen. Bei einem Erkennen einer Abweichung der Sollvorgabe von einem gemessenen Istwert einer Leistung des optischen Werkzeuges kann ein Hinweis in der Steuerung visualisiert oder an einen Benutzer ausgegeben werden. Beispielsweise kann eine Benachrichtigung "Schrauben Sie den Spiegelkopf ab!" durch die Steuereinheit generiert werden. Die Steuereinheit kann zusätzlich erkennen, ob der Spiegelkopf abgeschraubt ist oder gewechselt wurde, und kann anschließend eine weitere Messung durchführen. Hierdurch kann eine Fehleranalyse vereinfacht werden. Insbesondere kann durch die Leistungsmessvorrichtung ein Ort der Verschmutzung bestimmt werden. Konnte nach einem Tausch des Spiegelkopfes die Abweichung des Istwertes von dem Sollwert beseitigt werden, so lag eine Verschmutzung oder eine Beeinträchtigung im Bereich des Spiegelkopfes des optischen Werkzeuges vor. Sollte der Istwert weiterhin vom Sollwert abweichen, so liegt eine Verschmutzung oder eine Beeinträchtigung des optischen Pfades in einem anderen Bereich des optischen Werkzeuges vor.

Gemäß einem weiteren Aspekt der Erfindung wird ein Verfahren zum abschnittsweisen Aufnehmen eines optischen Werkzeuges in einer Parkposition bereitgestellt. In einem Schritt wird ein Abschnitt eines optischen Werkzeuges in einem Gehäuseinnenraum durch eine Öffnung eines Gehäuses hindurch platziert. Anschließend wird eine volumenvariable, an einem Rand der Öffnung des Gehäuses angeordnete Dichtmanschette gefüllt, bis ein Abstand zwischen dem abschnittsweise in der Öffnung angeordneten Werkzeug und dem Rand der Öffnung des Gehäuses fluiddicht ausgefüllt ist. Nach dem Abdichten der Öffnung durch die Dichtmanschette wird ein Spülgas in den Gehäuseinnenraum über eine in dem optischen Werkzeug und/oder dem Gehäuse angeordnete Zuleitung hineingeleitet, bis eine Soll-Konzentration des Spülgases im Gehäuseinnenraum erreicht oder ein Zeitintervall verstrichen ist.

Durch das erfindungsgemäße Verfahren kann eine sichere, vollautomatische und kostengünstige Lösung zum Abstellen eines optischen Werkzeuges umgesetzt werden. Die empfindlichen Bereiche des optischen Werkzeuges, wie beispielsweise ein Spiegelkopf, können somit effizient vor Verschmutzungen geschützt werden. Insbesondere kann ein Verbrauch eines Spülgases minimiert und während eines Stillstands des optischen Werkzeugs eine Absauganlage des Werkzeuges deaktiviert oder mit einer reduzierten Leistung betrieben werden.

Es kann beispielsweise für jedes optische Werkzeug ein Gehäuse als eine Parkposition bereitgestellt werden. Alternativ können auch mehrere optische Werkzeuge ein Gehäuse miteinander teilen, wobei ein entsprechendes Gehäuse mehrere Öffnungen mit Dichtmanschetten zum Aufnehmen von Werkzeugabschnitten unterschiedlicher optischer Werkzeuge aufweisen kann. Es kann beispielsweise jeder optische Laserkopf mit dieser Einheit vor Verschmutzungen geschützt werden. Alternativ kann auch auf eine Laserleistungsmessung verzichtet werden und nur eine Parkstation für den Spiegelkopf bereitgestellt werden. Der Spiegelkopf kann auch ein Prismenkopf sein. Hier ist als optische Umlenkung kein Spiegel, sondern ein Prisma eingesetzt.

Der Werkzeugabschnitt kann auch bei langen Stillstandzeiten besonders zuverlässig in dem Gehäuseinnenraum abgestellt werden, wenn ein Druck im Gehäuseinnenraum in Intervallen durch eine Leistungsmessvorrichtung oder durch einen Gehäusesensor überprüft und durch ein Zuführen von Spülgas eingestellt wird. Hierdurch kann verhindert werden, dass eventuell verunreinigte Luft in den Gehäuseinnenraum eindringt. Insbesondere kann ein geringfügiger Überdruck in dem Gehäuseinnenraum relativ zu einer Umgebung des optischen Werkzeuges eingestellt sein, um ein Eindringen von Verschmutzungen aktiv zu unterbinden.

Das optische Werkzeug kann aus einer Parkposition besonders schonend und sicher betrieben werden, wenn bei einer Reaktivierung des optischen Werkzeuges aus der Parkposition in eine aktive Position das im Gehäuseinnenraum vorhandene Spülgas über eine mit dem Gehäuse fluidleitend verbundene Gehäuseableitung abgeführt wird. Insbesondere kann ein unkontrolliertes Entweichen des Spülgases in ein Umfeld des optischen Werkzeugs und eine hieraus resultierende Gefährdung von Personen verhindert werden.

Damit der im Gehäuseinnenraum angeordnete Werkzeugabschnitt ohne Beschädigung entnommen werden kann, wird bei der Reaktivierung des optischen Werkzeuges aus der Parkposition in eine aktive Position das Füllvolumen der volumenvariablen Dichtmanschette reduziert. Durch das Entlasten der Dichtmanschette wird ein Luftspalt zwischen dem Rand der Öffnung und dem Werkzeugabschnitt hergestellt, welcher ein Entnehmen des Werkzeugabschnittes erleichtert.

Gemäß einem Ausführungsbeispiel des Verfahrens wird vor der Reaktivierung des optischen Werkzeuges eine Leistungsmessung des optischen Werkzeuges durch eine Leistungsmessvorrichtung durchgeführt. Hierdurch kann eine optimale Funktionstüchtigkeit des optischen Werkzeuges vor einer Inbetriebnahme sichergestellt werden.

Nachstehend werden anhand der Zeichnungen Ausführungsbeispiele der Erfindung näher erläutert. Es zeigen:
- Fig. 1: eine perspektivische Darstellung eines optischen Werkzeuges,
- Fig. 2: eine Schnittdarstellung eines Spiegelkopfes des optischen Werkzeuges und
- Fig. 3: eine perspektivische Darstellung einer Werkzeuganordnung in einer Parkposition gemäß einer Ausführungsform der Erfindung.

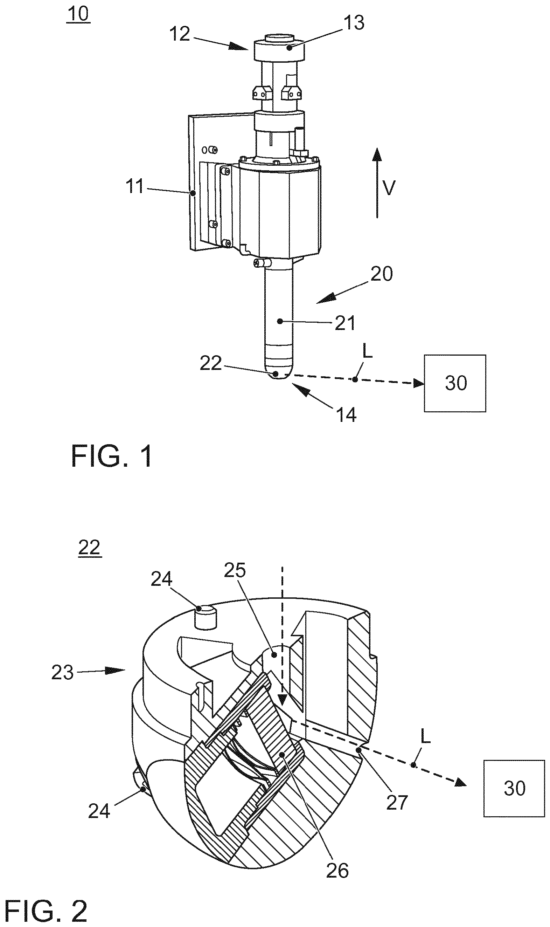

Die Fig. 1 zeigt ein optisches Werkzeug 10 in einer perspektivischen Darstellung. Das optische Werkzeug 10 ist gemäß dem Ausführungsbeispiel als ein Laserinnenbearbeitungswerkzeug 10 ausgeführt.

Das optische Werkzeug 10 ist an einer definiert bewegbaren Befestigungsplatte 11 angeordnet und ist länglich ausgestaltet. An einem in vertikaler Richtung V oberen Ende 12 des optischen Werkzeuges 10 ist eine Befestigungsvorrichtung 13 für einen nicht dargestellten Laser angeordnet.

An einem in vertikaler Richtung V unteren Ende 14 des optischen Werkzeuges 10 ist ein Werkzeugabschnitt 20 angeordnet. Der Werkzeugabschnitt 20 weist einen austauschbaren Rüssel 21 und einen endseitig am Rüssel 21 bzw. einer Laserlanze 21 angeordneten Spiegelkopf 22 auf. Der Rüssel 21 ist zylindrisch geformt und weist eine Außenkontur auf, welche nahtlos in eine Kontur des Spiegelkopfes 22 übergeht.

Ein in das optische Werkzeug 10 von einem oberen Ende 12 aus eingekoppelter Laserstrahl L kann durch den Rüssel 21 in den Spiegelkopf 22 geführt werden. Im Spiegelkopf 22 kann der eingekoppelte Laserstrahl L anschließend auf ein Werkstück 30 zum Bearbeiten des Werkstücks 30 gelenkt werden.

In der Fig. 2 ist eine Schnittdarstellung eines Spiegelkopfes 22 des optischen Werkzeuges 10 bzw. des Werkzeugabschnittes 20 gezeigt.

Der Spiegelkopf 22 weist einen zylindrisch geformten Anschlussbereich 23 zum formschlüssigen Befestigen des Spiegelkopfes 22 an dem Rüssel 21 auf. Der Spiegelkopf 22 kann vorzugsweise über eine Schraube 24 mit dem austauschbaren Rüssel 21 verbunden werden.

Im Anschlussbereich 23 ist in dem Spiegelkopf 22 eine Lasereintrittsöffnung 25 angeordnet. Durch die Lasereintrittsöffnung 25 kann ein Laserstrahl L auf einen austauschbaren Spiegel 26 gelenkt und in Richtung einer Laseraustrittsöffnung 27 abgelenkt werden. Die Pfeile veranschaulichen den Strahlengang des Lasers. Durch die Laseraustrittsöffnung 27 können Schmutzpartikel in den Spiegelkopf 22 eindringen und eine Ausbreitung eines Laserstrahls L beeinträchtigen.

Durch die Laseraustrittsöffnung 27 kann gemäß dem Ausführungsbeispiel Stickstoff hinausgeleitet werden, um ein Eindringen von Schmutzpartikeln zu verhindern.

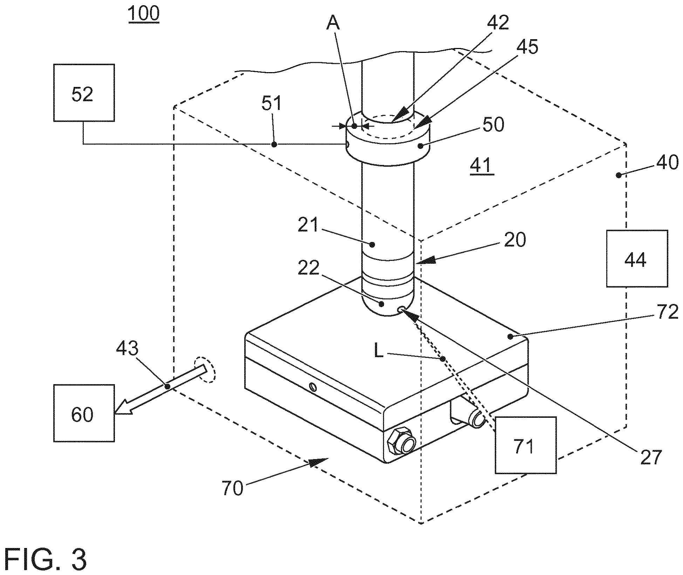

Die Fig. 3 zeigt eine perspektivische Darstellung einer Werkzeuganordnung 100 mit einem optischen Werkzeug 10 in einer Parkposition gemäß einer Ausführungsform der Erfindung.

Die Werkzeuganordnung 100 weist ein Gehäuse 40 mit einem Gehäuseinnenraum 41 auf. Das Gehäuse 40 dient als eine vollständig abdichtbare Einhausung für den Werkzeugabschnitt 20. In einem Bereich des Gehäuses 40 ist eine Öffnung 42 eingebracht. An einem Rand 45 der Öffnung 42 ist eine Dichtmanschette 50 angeordnet. Der Werkzeugabschnitt 20 ragt zumindest bereichsweise in einer Parkposition durch die Öffnung 42 in den Gehäuseinnenraum 41 hinein.

Die Dichtmanschette 50 bedeckt vollständig den Rand 45 der Öffnung 42 und ist aufblasbar ausgeführt. Hierfür ist die Dichtmanschette 50 über eine fluidführende Leitung 51 mit einer Fluidbereitstellungsanlage 52 verbunden. Die Dichtmanschette 50 kann somit bei Bedarf mit einem Fluid befüllt oder entleert werden. Im dargestellten Ausführungsbeispiel ist die Dichtmanschette 50 mit dem Fluid befüllt, wodurch das Gehäuse 40 im Bereich der Öffnung 42 hermetisch abgedichtet ist.

Des Weiteren weist das Gehäuse 40 eine Gehäuseableitung 43 auf, welche fluidleitend mit dem Gehäuseinnenraum 41 gekoppelt ist. Die Gehäuseableitung 43 ist mit einer Anlagenabsaugung 60 verbunden, wodurch bei Bedarf die Gehäuseableitung 43 zum Abführen von verunreinigter Luft mit einem Unterdruck beaufschlagt werden kann.

Der Gehäuseinnenraum 41 kann durch die Laseraustrittsöffnung 27 mit Stickstoff ausgefüllt werden. Hierdurch können für eine Lagerung des Spiegelkopfes 22 optimale Randbedingungen geschaffen werden, welche ein Verschmutzen des Spiegelkopfes 22 unterbinden. Zum Feststellen eines optimalen Füllgrades des Gehäuseinnenraumes 41 und zum Steuern einer Stickstoffzuführung durch die Laseraustrittsöffnung 27 ist am Gehäuse 40 ein Sensor 44 zum Messen einer Stickstoffkonzentration angebracht.

In dem Gehäuse 40 ist weiterhin eine Leistungsmessvorrichtung 70 angeordnet. Die Leistungsmessvorrichtung 70 ist hier als eine Laserleistungsmesseinrichtung mit einem Messkopf 71 zum Detektieren einer Strahlungsleistung des Laserstrahls L ausgestaltet. Beispielsweise kann der Messkopf 71 eine thermische Messsonde sein. Der Messkopf 71 ist mit einer Steuereinheit 72 der Leistungsmessvorrichtung 70 verbunden und kann von der Steuereinheit 72 ausgewertet werden. Insbesondere kann eine Leistungsmessung vor einem Entfernen des Werkzeugabschnittes 20 aus dem Gehäuse 40 oder kurz nach einem Positionieren des Werkzeugabschnittes 20 im Gehäuse 40 durchgeführt werden.

### Bezugszeichenliste

- 10: optisches Werkzeug / Laserinnenbearbeitungswerkzeug
- 11: Befestigungsplatte
- 12: oberen Ende des Werkzeuges
- 13: Befestigungsvorrichtung für einen Laser
- 14: unteres Ende des Werkzeuges

- 20: Werkzeugabschnitt
- 21: Rüssel / Laserlanze
- 22: Spiegelkopf
- 23: zylindrisch geformter Anschlussbereich
- 24: Schraube
- 25: Lasereintrittsöffnung
- 26: Spiegel
- 27: Laseraustrittsöffnung

- 30: Werkstück

- 40: Gehäuse
- 41: Gehäuseinnenraum
- 42: Öffnung
- 43: Gehäuseableitung
- 44: Gehäusesensor
- 45: Rand der Öffnung

- 50: Dichtmanschette
- 51: fluidführende Leitung
- 52: Fluidbereitstellungsanlage

- 60: Anlagenabsaugung

- 70: Leistungsmessvorrichtung
- 71: Messkopf
- 72: Steuereinheit
- 100: Werkzeuganordnung
- L: Laserstrahl
- V: vertikale Richtung
- A: Abstand

## Patentansprüche

1. Werkzeuganordnung (100) zum abschnittsweisen Aufnehmen eines optischen Werkzeuges (10) in einer Parkposition, aufweisend ein optisches Werkzeug (10) und aufweisend ein Gehäuse (40) mit einer Öffnung (42) geeignet zum abschnittsweisen Aufnehmen des optischen Werkzeuges (10) in einem Gehäuseinnenraum (41), mit einer fluidleitend mit dem Gehäuse (40) verbundenen Gehäuseableitung (43), und mit einer an der Öffnung (32) des Gehäuses (40) angeordneten Dichtmanschette (50), **dadurch gekennzeichnet, dass** die Dichtmanschette (50) eine fluidführende Leitung (51) zum Anpassen eines variablen Füllvolumens der Dichtmanschette (50) aufweist.

2. Werkzeuganordnung nach Anspruch 1, wobei ein Abstand (A) zwischen einem Rand (45) der Öffnung (42) des Gehäuses (40) und dem abschnittsweise aufgenommenen optischen Werkzeug (10) durch die Dichtmanschette (50) abdichtbar ist, wobei die Dichtmanschette (50) bevorzugterweise aus einem flexiblen Material gefertigt ist.

3. Werkzeuganordnung nach einem der Ansprüche 1 oder 2, wobei die Öffnung (42) des Gehäuses (40) rund ausgestaltet ist und die Dichtmanschette (50) entlang des Umfangs der runden Öffnung (42) des Gehäuses (40) angeordnet ist.

4. Werkzeuganordnung nach einem der Ansprüche 1 bis 3, wobei ein Fluid zum Aufrechterhalten eines Reinheitsgrades in dem Gehäuseinnenraum (41) aus einer Fluidzufuhr (27) des optischen Werkzeuges (10) und/oder über eine Gehäusezuleitung in den Gehäuseinnenraum (41) einleitbar ist.

5. Werkzeuganordnung nach einem der Ansprüche 1 bis 4, wobei die Werkzeuganordnung (100) eine Leistungsmessvorrichtung (70) aufweist, welche in dem Gehäuse (40) zur Überprüfung einer Funktion des optischen Werkzeuges (10) angeordnet ist, wobei bevorzugterweise durch die Leistungsmessvorrichtung (70) eine Abweichung eines Istwertes des optischen Werkzeuges (10) von einem Sollwert messbar ist.

6. Werkzeuganordnung nach Anspruch 5, wobei die Leistungsmessvorrichtung (70) eine Steuereinheit (72) zum Durchführen von Auswertungen und zum Ermitteln von Hinweisen zur Benutzung des optischen Werkzeuges (10) aufweist.

7. Verfahren zum abschnittsweisen Aufnehmen eines optischen Werkzeuges (10) in einer Parkposition, aufweisend die Schritte:
- Platzieren eines Abschnittes (20) eines optischen Werkzeuges (10) in einem Gehäuseinnenraum (41) durch eine Öffnung (42) eines Gehäuses (40) hindurch,
- Auffüllen einer volumenvariablen, an einem Rand (45) der Öffnung (42) des Gehäuses (40) angeordneten Dichtmanschette (50), bis ein Abstand zwischen dem abschnittsweise in der Öffnung (42) angeordneten Werkzeug (10) und dem Rand (45) der Öffnung (42) des Gehäuses (40) fluiddicht ausgefüllt ist, und
- Einleiten eines Spülgases in den Gehäuseinnenraum (41) über eine in dem optischen Werkzeug (10) und/oder dem Gehäuse (40) angeordnete Zuleitung, bis eine Soll-Konzentration des Spülgases im Gehäuseinnenraum (41) erreicht oder ein Zeitintervall verstrichen ist.

8. Verfahren nach Anspruch 7, wobei ein Druck im Gehäuseinnenraum (41) in Intervallen durch eine Leistungsmessvorrichtung (70) oder durch einen Gehäusesensor (44) überprüft und durch ein Zuführen von Spülgas eingestellt wird.

9. Verfahren nach Anspruch 7 oder 8, wobei bei einer Reaktivierung des optischen Werkzeuges (10) aus der Parkposition in eine aktive Position das im Gehäuseinnenraum (41) vorhandene Spülgas über eine mit dem Gehäuse (40) fluidleitend verbundene Gehäuseableitung (43) abgeführt wird, wobei bevorzugterweise bei der Reaktivierung des optischen Werkzeuges (10) aus der Parkposition in eine aktive Position das Füllvolumen der volumenvariablen Dichtmanschette (50) reduziert wird.

10. Verfahren nach einem der Ansprüche 7 bis 9, wobei vor der Reaktivierung des optischen Werkzeuges (10) eine Leistungsmessung des optischen Werkzeuges (10) durch eine Leistungsmessvorrichtung (70) durchgeführt wird.

## Claims

1. Tool arrangement (100) for receiving an optical tool (10) in a park position in sections, having an optical tool (10) and having a housing (40) with an opening (42) suitable for receiving the optical tool (10) in sections in a housing interior (41); with a housing discharge line (43) connected to the housing (40) in a fluid-conducting manner; and with a sealing collar (50) arranged at the opening (32) of the housing (40), **characterized in that** the sealing collar (50) has a fluid-conducting line (51) for adapting a variable filling volume of the sealing collar (50).

2. Tool arrangement according to Claim 1, wherein a distance (A) between an edge (45) of the opening (42) of the housing (40) and the optical tool (10) received in sections can be sealed by the sealing collar (50), wherein the sealing collar (50) is preferably made of a flexible material.

3. Tool arrangement according to one of Claims 1 or 2, wherein the opening (42) of the housing (40) is round, and the sealing collar (50) is arranged along the circumference of the round opening (42) of the housing (40).

4. Tool arrangement according to one of Claims 1 to 3, wherein a fluid for maintaining a degree of purity in the housing interior (41) can be introduced into the housing interior (41) from a fluid supply (27) of the optical tool (10) and/or via a housing supply line.

5. Tool arrangement according to one of Claims 1 to 4, wherein the tool arrangement (100) comprises a power measuring device (70) which is arranged in the housing (40) for checking a function of the optical tool (10), wherein a deviation of an actual value of the optical tool (10) from a desired value can preferably be measured by the power measuring device (70).

6. Tool arrangement according to Claim 5, wherein the power measuring device (70) has a control unit (72) for performing evaluations and for determining indications for using the optical tool (10).

7. Method for receiving an optical tool (10) in a park position in sections, comprising the steps of:
- placing a section (20) of an optical tool (10) into a housing interior (41) through an opening (42) of a housing (40),
- filling a volume-variable sealing collar (50), arranged at an edge (45) of the opening (42) of the housing (40), until a distance between the tool (10) arranged in sections in the opening (42) and the edge (45) of the opening (42) of the housing (40) is filled in a fluid-tight manner, and
- introducing a purging gas into the housing interior (41) via a supply line arranged in the optical tool (10) and/or the housing (40), until a desired concentration of the purging gas in the housing interior (41) is achieved or a time interval has elapsed.

8. Method according to Claim 7, wherein a pressure in the housing interior (41) is checked at intervals by a power measuring device (70) or by a housing sensor (44) and is adjusted by supplying purging gas.

9. Method according to Claim 7 or 8, wherein when the optical tool (10) is reactivated from the park position into an active position, the purging gas present in the housing interior (41) is discharged via a housing discharge line (43) connected in a fluid-conducting manner to the housing (40), wherein the filling volume of the volume-variable sealing collar (50) is preferably reduced when the optical tool (10) is reactivated from the park position into an active position.

10. Method according to one of Claims 7 to 9, wherein a power measurement of the optical tool (10) is performed by a power measuring device (70) prior to reactivating said optical tool (10).

## Revendications

1. Système d'outil (100) de réception par segment d'un outil optique (10) en position de repos, présentant un outil optique (10) et présentant un boîtier (40) comprenant une ouverture (42) adaptée pour la réception par segments de l'outil optique (10) dans un espace intérieur de boîtier (41), comprenant une conduite d'évacuation de boîtier (43) connectée en écoulement de fluide avec le boîtier (40), et comprenant une manchette d'étanchéité (50) disposée sur l'ouverture (32) du boîtier (40), **caractérisé en ce que** la manchette d'étanchéité (50) présente une conduite conductrice de fluide (51) pour l'adaptation d'un volume de remplissage variable de la manchette d'étanchéité (50).

2. Système d'outil selon la revendication 1, dans lequel la distance (A) entre un bord (45) de l'ouverture (42) du boîtier (40) et l'outil optique (10) reçu par segment peut être étanchéifiée par la manchette d'étanchéité (50), la manchette d'étanchéité (50) étant de préférence fabriqué à partir d'un matériau flexible.

3. Système d'outil selon la revendication 1 ou 2, dans lequel l'ouverture (42) du boîtier (40) est conçue ronde et la manchette d'étanchéité (50) est disposée le long de la circonférence de l'ouverture (42) ronde du boîtier (40).

4. Système d'outil selon l'une quelconque des revendications 1 à 3, dans lequel un fluide servant à maintenir un degré de pureté dans l'espace intérieur de boîtier (41) peut être introduit à partir d'une alimentation en fluide (27) de l'outil optique (10) et/ou à travers une conduite de boîtier dans l'espace intérieur de boîtier (41).

5. Système d'outil selon l'une quelconque des revendications 1 à 4, dans lequel le système d'outil (100) présente un dispositif de mesure de performance (70), lequel est disposé dans le boîtier (40) pour la vérification du fonctionnement de l'outil optique (10), dans lequel de préférence un écart de la valeur réelle de l'outil optique (10) d'une valeur de consigne peut être mesurée par le dispositif de mesure de performance (70).

6. Système d'outil selon la revendication 5, dans lequel le dispositif de mesure de performance (70) présente une unité de commande (72) pour l'exécution des évaluations et pour la détermination d'indications concernant l'utilisation de l'outil optique (10).

7. Procédé de réception par segments d'un outil optique (10) en position de repos, présentant les étapes de :
- placement d'un segment (20) d'un outil optique (10) dans un espace intérieur de boîtier (41) à travers une ouverture (42) d'un boîtier (40),
- remplissage d'une manchette d'étanchéité (50) variable en volume disposée sur le bord (45) de l'ouverture (42) du boîtier (40), jusqu'à ce qu'une distance entre l'outil (10) disposé par segment dans l'ouverture (42) et le bord (45) de l'ouverture (42) du boîtier (40) soit rempli de manière étanche au fluide, et
- introduction d'un gaz de purge dans l'espace intérieur de boîtier (41) à travers une conduite disposée dans l'outil optique (10) et/ou dans le boîtier (40), jusqu'à ce qu'une concentration de consigne du gaz de purge dans l'espace intérieur de boîtier (41) soit atteinte ou qu'un intervalle de temps se soit écoulé.

8. Procédé selon la revendication 7, dans lequel une pression dans l'espace intérieur de boîtier (41) est vérifiée à intervalles par un dispositif de mesure de performance (70) ou par un capteur de boîtier (44) et réglée par l'amenée de gaz de purge.

9. Procédé selon la revendication 7 ou 8, dans lequel, lors de la réactivation de l'outil optique (10) de la position de repos à une position active, le gaz de purge présent dans l'espace intérieur de boîtier (41 ) est évacué à travers une conduite d'évacuation de boîtier (43) connectée en écoulement de fluide avec le boîtier (40), dans lequel de préférence, lors de la réactivation de l'outil optique (10) de la position de repos à une position active, le volume de remplissage de la manchette d'étanchéité (50) variable en volume est réduit.

10. Procédé selon l'une quelconque des revendications 7 à 9, dans lequel, avant la réactivation de l'outil optique (10), une mesure de performance de l'outil optique (10) est effectuée par un dispositif de mesure de performance (70).
